# EUROPÄISCHE PATENTANMELDUNG

(11) **EP 4 645 004 A1**
(43) Veröffentlichungstag der Anmeldung: **05.11.2025**
(21) Anmeldenummer: 24173425.0
(22) Anmeldetag: 30.04.2024
(51) Int. Cl.: G05B 13/02, B21B 37/18, G05B 19/19, G05B 19/418

(54) **SOLLWERT-ERMITTLUNG BEI DER METALLBANDPRODUKTION**

(71) Anmelder: Primetals Technologies Germany GmbH, 91058 Erlangen (DE)
(72) Erfinder: Sparrer, Susanne, 91054 Erlangen (DE)
(74) Vertreter: Metals@Linz

(57) **Zusammenfassung**

Die vorliegende Erfindung betrifft ein Verfahren (100) und eine Vorrichtung (10) zum Ermitteln eines Sollwerts (S) für einen ausgewählten Produktionsparameter (P) einer Walzanlage (200) mit wenigstens einer Walzgerüstgruppe (230) zum Walzen eines Metallprodukts (12) zu einem Metallband (14) sowie eine Walzanlage (200) mit einer solchen Vorrichtung (10), ein Computerprogrammprodukt und ein maschinell erlerntes Modell (40). Dabei wird ein Wert (W) eines Materialparameters (M) für ein vorbestimmtes Referenzmaterial bereitgestellt (S1). Es wird ein Korrekturfaktor (c2) für den Materialparameter (M) von einem maschinell erlernten Modell (40), welches auf einem rekurrenten neuronalen Netz (42) beruht, auf Grundlage von vorbekannten Produktionsparametern (P*) bei der Metallbandproduktion ermittelt (S3). Der Sollwert (S) für den Produktionsparameter (P) der Walzanlage (200) kann dann auf Grundlage eines physikalischen Produktionsparametermodells (52), in das der mit dem Korrekturfaktor (c2) angepasste Materialparameterwert (W) und Zielvorgaben (Z) für das Walzen des Metallbands (14) eingehen, ermittelt werden (S4).

## Beschreibung

### Gebiet der Technik

Die vorliegende Erfindung betrifft ein Verfahren und eine Vorrichtung zum Ermitteln eines Sollwerts für einen Produktionsparameter einer Walzanlage mit wenigstens einer Walzgerüstgruppe zum Walzen eines Metallprodukts zu einem Metallband sowie eine Walzanlage mit einer solchen Vorrichtung, ein Computerprogrammprodukt und ein maschinell erlerntes Modell.

### Stand der Technik

In Walzanlagen sind eine oder mehrere Walzstraßen, d. h. eine oder mehrere Gruppen von Walzgerüsten, vorgesehen, mit denen ein metallisches Vorprodukt, zum Beispiel ein frisch gegossener Strang, eine Bramme oder ein bereits vorgewalztes Metallband, zum Endprodukt gewalzt wird. Zur Produktion neuer Bänder, d. h. von Bändern mit neuen Eigenschaften wie einer gegenüber dem Vorgängerband geänderten Banddicke, Breite, Oberflächen- und/oder Mikrostruktur und/oder dergleichen, werden im laufenden Betrieb Produktions- oder Betriebsparameter der Anlage angepasst. Hierfür ist es jedoch zunächst notwendig, die entsprechenden Sollwerte für diese Parameter zu ermitteln.

Beispielsweise müssen für das Walzen eines neuen Bandes zunächst die Sollwerte für wichtige Größen wie Walzkraft, Drehmoment, Biegung und Axialverschiebung der Walzen ermittelt werden. Die Qualität dieser Vorausermittlung ist mitentscheidend für die spätere Produktqualität, da sich diese Größen zum Beispiel auf die Dicke, das Profil und/oder die Planheit des zu walzenden Bandes auswirken. Darüber hinaus kann von solchen wichtigen Größen auch die Einstellung anderer Betriebsparameter wie beispielsweise der Massenfluss abhängen.

Zur Vorausermittlung von Produktionsparametern werden üblicherweise Lookup-Tabellen eingesetzt. In diesen Tabellen sind Bandparameter, welche die gewünschten Eigenschaften des zu produzierenden Bands charakterisieren, mit entsprechenden, zum Beispiel durch Erfahrung gesammelten Produktionsparametern verknüpft. Alternativ werden auch physikalische Modelle eingesetzt, in welche die physikalischen Beziehungen zwischen Bandparametern und Produktionsparametern eingehen.

Ein anderer Ansatz beruht auf der Nutzung von sogenannter "künstlicher Intelligenz". Entsprechend trainierte, d. h. maschinell erlernte, Modelle können anhand bereitgestellter Bandparameter dann die entsprechenden Produktionsparameter ausgeben. Besonders vorteilhaft wird ein solcher Ansatz auch mit dem Einsatz eines physikalischen Modells kombiniert.

Nachteilig an allen diesen bisherigen Ansätzen ist jedoch, dass in der Regel keine oder nur eine ungenügende Berücksichtigung des aktuellen Anlagenzustands oder gar der unmittelbaren Produktions- oder Anlagenhistorie stattfindet. Die verwendeten Lookup-Tabellen oder Modelle können zum Beispiel schnell unbrauchbar werden, wenn Änderungen an der Walzanlage vorgenommen oder neue Materialien verwendet werden. Zudem können solche Lookup-Tabellen und Modelle lediglich "durchschnittliche" Produktionsparameter-Sollwerte ausgeben, da sich der Anlagenzustand, d. h. die Produktionsbedingungen, in der Praxis laufend geringfügig ändern, z. B. durch sich ändernde Umgebungsbedingungen, Abnutzung und/oder dergleichen.

Beispielsweise werden als maschinell erlernte Modelle sogenannte Feedforward-Netze eingesetzt, welche jedes neu zu produzierende Band unabhängig von den zuvor produzierten Bändern betrachten. Die Vorhersagen solcher Netze beruhen also immer ausschließlich auf dem Mittel der in der Vergangenheit gesammelten Erfahrung, weswegen hier auch von "Langzeitvererbung" gesprochen wird. In der Praxis wird deshalb bei neu zu walzenden Bändern, die dem Vorgängerband ähnlich sind, die Vorhersage solcher Netze ignoriert und stattdessen die mit dem Vorgängerband korrespondierenden Produktionsparameter-Sollwerte verwendet. Dies wird als "Kurzzeitvererbung" bezeichnet.

### Zusammenfassung der Erfindung

Es ist eine Aufgabe der vorliegenden Erfindung, die Ermittlung von Sollwerten für Produktionsparameter einer Gießwalzanlage weiter zu verbessern, insbesondere neben statischen Beziehungen zwischen Bandparametern und Produktionsparametern den gegenwärtigen Anlagenzustand und gegebenenfalls sogar die unmittelbare Anlagen- oder Produktionshistorie zu berücksichtigen.

Diese Aufgabe wird gelöst durch ein Verfahren und eine Vorrichtung sowie eine Walzanlage mit einer solchen Vorrichtung, einem Computerprogrammprodukt und einem maschinell erlernten Modell gemäß den unabhängigen Ansprüchen.

Bevorzugte Ausführungsformen sind Gegenstand der abhängigen Ansprüche sowie der folgenden Beschreibung.

Gemäß einem ersten Aspekt wird beim, insbesondere computerimplementierten, Verfahren zum Ermitteln eines Sollwerts für einen ausgewählten Produktionsparameter einer Walzanlage mit wenigstens einer Walzgerüstgruppe zum Walzen eines Metallprodukts zu einem Metallband ein Wert eines Materialparameters für ein vorbestimmtes Referenzmaterial bereitgestellt. Zudem wird ein Korrekturfaktor für den Materialparameter von einem maschinell erlernten Modell, welches auf einem rekurrenten neuronalen Netz beruht, auf Grundlage von vorbekannten Produktionsparametern bei der Metallbandproduktion ermittelt. Der Sollwert für den ausgewählten Produktionsparameter der Walzanlage kann dann auf Grundlage eines physikalischen Produktionsparametermodells, in das der mit dem Korrekturfaktor angepasste Materialparameterwert und Zielvorgaben für das zu walzende Metallband eingehen, ermittelt werden.

Eine Walzanlage im Sinne der Erfindung kann bereits von der wenigstens einen Walzgerüstgruppe mit wenigstens einem Walzgerüst gebildet sein. Die Walzanlage kann aber auch weitere Anlagenkomponenten umfassen, beispielsweise eine Heizvorrichtung zum (Wieder-) Aufheizen des zu walzenden Metallprodukts, eine Entzunderungsvorichtung zum Entzundern des Metallprodukts, einen Kantenstaucher zur Profilformung, eine Kühlstraße zum Kühlen des gewalzten Metallbands, eine oder mehrere Trennvorrichtungen zum Trennen des Metallbands, einen oder mehrere Haspel zum Aufhaspeln des Metallbands und/oder dergleichen. Die Walzanlage kann insbesondere Teil einer Gießwalzanlage, alternativ aber auch separat von der Gießmaschine vorgesehen sein. Die Walzanlage kann zum Warm- oder zum Kaltwalzen eingerichtet sein.

Ein Ermitteln eines Sollwerts für einen ausgewählten Produktionsparameter im Sinne der Erfindung ist vorzugsweise ein Vorausberechnen oder Vorhersagen, d. h. Prädizieren, des Sollwerts.

Ein Materialparameter im Sinne der Erfindung ist vorzugsweise ein materialabhängiger Parameter, zum Beispiel eine Dichte, eine Wärmeleitfähigkeit, eine Elastizität, eine Fließspannung und/oder dergleichen.

Ein maschinell erlerntes Modell im Sinne der Erfindung ist vorzugsweise ein von einem oder mehreren Algorithmen auf Grundlage von Trainingsdaten erzeugtes statistisches Modell. Das maschinell erlernte Modell kann insbesondere auch als trainiertes Modell bezeichnet werden. Das maschinell erlernte Modell ist zweckmäßigerweise das Ergebnis von maschinellem Lernen. Ein derart maschinell erlerntes Modell kann gemeinhin auch als künstliche Intelligenz bezeichnet werden, welche Muster und Gesetzmäßigkeiten in den Trainingsdaten erkannt hat und damit auch unbekannte Daten gemäß dieser Muster und Gesetzmäßigkeiten beurteilen oder auswerten kann. Die voranstehend und im Folgenden beschriebenen maschinell erlernten Modelle beruhen auf sogenannten "neuronalen Netzen" ("neural networks").

Ein vorbekannter Produktionsparameter im Sinne der Erfindung ist vorzugsweise ein bekannter Wert eines bei der Metallbandproduktion relevanten Produktionsparameters, insbesondere der Wert eines messbaren oder (vor-)eingestellten Produktionsparameters bei der Metallbandproduktion. Beispielsweise können solche vorbekannten Produktionsparameter die Querschnittsmaße des zu walzenden Metallprodukts, eine Temperatur des zu walzenden Metallprodukts, eine chemische Zusammensetzung des zu walzenden Metallprodukts, ein Walzendurchmesser, eine Transportgeschwindigkeit des zu walzenden Metallprodukts durch die Anlage bzw. bei Eintritt in die Anlage und/oder dergleichen sein. Ein vorbekannter Produktionsparameter kann also auch als vorbekannter, z. B. festgelegter oder gemessener, Produktionsparameterwert verstanden werden.

Ein Produktionsparametermodell im Sinne der Erfindung ist vorzugsweise eine Modellierung eines, insbesondere des ausgewählten, Produktionsparameters. Im Produktionsparametermodell sind zweckmäßigerweise Zielvorgaben, d.h. gewünschte Bandparameter, mit dem Produktionsparameter verknüpft. Beispielsweise kann das Produktionsparametermodell auf physikalischen Beziehungen zwischen diesen Zielvorgaben und dem Produktionsparameter beruhen. Ein solches Modell kann analytisch oder numerisch lösbar sein.

Ein Aspekt der Erfindung beruht auf dem Ansatz, eine Kombination aus einem maschinell erlernten Modell und einem physikalischen Modell zu nutzen, um den Sollwert für einen ausgewählten Produktionsparameter der Walzanlage zu ermitteln. Ausgangspunkt für die Verarbeitung von Daten in dieser Kombination ist dabei vorzugsweise die Bereitstellung eines Materialparameterwerts für ein vorbestimmtes Referenzmaterial. Der Materialparameterwert kann beispielsweise, etwa durch Simulation oder Berechnung, ermittelt oder vorgegeben werden. Der bereitgestellte Materialparameterwert kann aber nicht unmittelbar zur Berechnung des Sollwerts berechnet werden. Er muss vielmehr noch an die tatsächlich vorliegenden Gegebenheiten angepasst werden. Dazu ermittelt das maschinell erlernte Modell zweckmäßigerweise einen Korrekturfaktor für den Materialparameter. Das maschinell erlernte Modell geht hierbei vorzugsweise von bereits vorbekannten Produktionsparametern, zum Beispiel vorgegebenen Produktionsparametern wie einem anhand eines Stichplans ermittelten Reduktionsgrad oder einer chemischen Zusammensetzung des zu walzenden Metallprodukts oder messbaren Produktionsparametern wie der Temperatur des zu walzenden Metallprodukts, aus. Vorteilhaft berücksichtigt das maschinell erlernte Modell hierbei aber auch zumindest den gegenwärtigen Anlagen- oder Betriebszustand oder gegebenenfalls auch die Produktionsbedingungen bei einer vorbestimmten Anzahl zuvor produzierter Bänder. D. h., dass das maschinell erlernte Modell zumindest die gegenwärtigen, sich in der Regel auf kurzen Zeitskalen ändernden Produktionsbedingungen, gegebenenfalls auch die Produktionsbedingungen bei einer vorbestimmten Anzahl zuvor produzierter Bänder, bei der Ermittlung des Korrekturfaktors mit einbeziehen kann.

Ein gegenwärtiger Betriebs- oder Anlagenzustand bzw. die gegenwärtigen Produktionsbedingungen sind, jedenfalls in der Praxis, nicht unmittelbar und umfassend messbar. Anders gesagt kann der tatsächliche Betriebs- oder Anlagenzustand bzw. die gegenwärtigen Produktionsbedingungen durch (einstell- oder messbare) Anlagen- bzw. Produktionsparameter nicht vollständig abgebildet werden. Denn auf die Produktion eines Metallbands nimmt eine Vielzahl von Größen Einfluss, die sich letztlich nicht alle kontrollieren und/oder erfassen lassen. Beispielsweise können Umgebungsbedingungen wie Umgebungstemperatur, Luftfeuchtigkeit und/oder dergleichen eine Rolle spielen. Gleichzeitig kann auch Verschleiß, etwa an den Walzen, Lagern, Aktuatoren und/oder dergleichen Einfluss nehmen.

Der gegenwärtige Betriebs- oder Anlagenzustand bzw. die gegenwärtigen Produktionsbedingungen können aber von einem spezialisierten maschinell erlernten Modell bzw. neuronalem Netz erfasst werden. Das erfindungsgemäße Modell kann beispielsweise adaptiv sein, d. h. sich an ändernde Betriebszustände anpassen. Hierfür beruht das maschinell erlernte Modell zweckmäßigerweise auf einem rekurrenten neuronalen Netz ("recurrent neural network", RNN). Dieses verfügt nicht nur über ein generelles, zeitunabhängiges Wissen zum Beispiel über verschiedene Materialien und (physikalische) Zusammenhänge bei der Bandproduktion in der Gießwalzanlage (d. h. ein sogenanntes "Langzeitgedächtnis"), sondern kann auch über Wissen zum aktuellen Anlagenzustand (d. h. ein sogenanntes "Kurzzeitgedächtnis") verfügen. Mit dem rekurrenten neuronalen Netz lassen sich dieses Langzeitgedächtnis und das Kurzzeitgedächtnis auf sehr geschickte Art und Weise kombinieren. Infolgedessen kann ein nahezu optimaler Korrekturfaktor - und infolgedessen auch ein nahezu optimaler Sollwert für den ausgewählten Produktionsparameter - ermittelt werden, in den zumindest ein Teil der Anlagenhistorie eingeht. Denn mittels des derartig maschinell erlernten Modells kann bei der Ermittlung des, vorzugsweise anlagen- bzw. sogar walzgerüstspezifischen, Korrekturfaktors berücksichtig werden, mit welchen Korrekturfaktoren die Sollwerte für die vorangehenden Bänder ermittelt wurden - ohne dass explizit auf die früheren Korrekturfaktoren zurückgegriffen werden muss, etwa diese Korrekturfaktoren bei der Produktion eines ähnlichen Bands unverändert übernommen werden.

Der Sollwert für den ausgewählten Produktionsparameter kann dann letztlich mittels einer Modellierung des Produktionsparameters ermittelt werden, wobei der mit dem Korrekturfaktor korrigierte Materialparameterwert zweckmäßigerweise als Eingangsgröße des Produktionsparametermodells dient. Der mittlere Fehler dieser Sollwert-Vorhersage ist dabei, im Vergleich zu konventionellen Ansätzen wie z. B. der Vorhersage mittels Lookup-Tabelle, besonders klein und automatisch an den aktuellen Anlagenzustand adaptiert.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

Besonders hohe Flexibilität bei der Korrektur des Materialparameterwerts kann erreicht werden, indem eine Kombination aus zwei maschinell erlernten Modellen genutzt wird. Hierfür kann ein weiteres maschinell erlerntes Modell, welches auf einem vorwärtsgerichteten neuronalen Netz beruht, auf Grundlage von Materialkenndaten, welche den Zustand des als nächstes in der Walzanlage zu verarbeitenden Metalls charakterisieren, einen weiteren Korrekturfaktor für den Materialparameter ermitteln. Das weitere maschinell erlernte Modell, welches im Folgenden gelegentlich auch als erstes maschinell erlerntes Modell bezeichnet wird, berücksichtigt also zweckmäßigerweise das tatsächlich zur Bandproduktion eingesetzte Material und dessen Eigenschaften, beispielsweise dessen chemische Zusammensetzung und/oder Temperatur. Es ist zweckmäßigerweise materialspezifisch ausgebildet bzw. trainiert. Es kann dazu dienen, die Härte des aktuell verwendeten Materials zu berücksichtigen bzw. zu ermitteln. Das eingangs bereits diskutierte maschinell erlernte Modell, welches im Folgenden gelegentlich auch als zweites maschinell erlerntes Modell bezeichnet wird, kann dagegen die Anlagenkonfiguration berücksichtigen. Es ist zweckmäßigerweise anlagenspezifisch ausgebildet bzw. trainiert.

Diese Entkopplung der Korrektur des bereitgestellten Materialparameterwerts zum einen in eine materialspezifische Korrektur und zum anderen in eine anlagenspezifische Korrektur erlaubt den Einsatz von spezialisierten maschinell erlernten Modellen bzw. neuronalen Netzen. Das erste Modell kann beispielsweise statisch sein, während das zweite Modell - wie bereits erwähnt - adaptiv ist, d. h. sich an ändernde Betriebszustände anpassen kann. Infolgedessen beruht das erste maschinell erlernte Modell zweckmäßigerweise auf einem vorwärtsgerichteten neuronalen Netz ("feedforward neural network", FNN). Der Einsatz des weiteren (ersten) maschinell erlernten Modells ist daher zum Beispiel bei der Inbetriebnahme einer neuen Anlage zweckdienlich, da es nicht mehr an diese Anlage angepasst bzw. auf dieser Anlage trainiert werden muss. Vielmehr kann das weitere maschinell erlernte Modell anlagenübergreifend eingesetzt werden.

Bei der Verwendung eines maschinell erlernten Modells, das auf einem rekurrenten neuronalen Netz beruht, können frühere Anlagenzustände gegebenenfalls über einen langen Zeitraum Einfluss auf das Ermitteln des Korrekturfaktors haben. Daher ist es bevorzugt, dass das (erste) maschinell erlernte Modell auf einem rekurrenten neuronalen Netz mit einem steuerbaren Kurzzeitgedächtnis beruht. Ein rekurrentes neuronales Netz mit einem steuerbaren Kurzzeitgedächtnis im Sinne der Erfindung ist vorzugsweise ein neuronales Netz, welches sogenannte LSTM-Module oder -Zellen (LSTM = "long short term memory") aufweist. Ein rekurrentes neuronales Netz mit einem steuerbaren Kurzzeitgedächtnis kann infolgedessen auch als LSTM-Netz bezeichnet werden. Ein derartiges Netz weist Knoten oder Zellen in den Zwischenschichten ("hidden layers") mit einem Eingangstor ("input gate"), einem Merk- und Vergesstor ("forget gate") und einem Ausgangstor ("output gate") auf, welche die Signalverarbeitung in der jeweiligen Zelle steuern und als eine Art Filter wirken. Die genannten Tore steuern in einem LSTM-Netz, was "gemerkt" und was "vergessen" wird.

Beim Einsatz eines maschinell erlernten Modells, welches auf einem rekurrenten neuronalen Netz mit einem steuerbaren Kurzzeitgedächtnis beruht, kann der Einfluss früherer, insbesondere lange zurückliegender Anlagenzustände auf die Ermittlung des zweiten Korrekturfaktors beschränkt werden. Dadurch lässt sich ein "Reset" durchführen, zum Beispiel bei einem Walzenwechsel, bei längerem Stillstand der Gießwalzanlage und/oder dergleichen.

Eine Möglichkeit, um das Kurzzeitgedächtnis des zweiten maschinell erlernten Modells automatisch und aufwandsarm aufbauen zu können, besteht darin, den Korrekturfaktor mit dem maschinell erlernten Modell bei der aufeinanderfolgenden Produktion von Metallbändern kontinuierlich zu ermitteln. Unter einer kontinuierlichen Ermittlung ist hierbei der Einsatz des zweiten maschinell erlernten Modells bei der aufeinanderfolgenden Produktion von, insbesondere verschiedenen, Metallbändern, ohne dass das zweite maschinell erlernte Modell zurückgesetzt wird, zu verstehen. Das Kurzzeitgedächtnis kann sich also während des Regelbetriebs der Walzanlage kontinuierlich immer weiter aufbauen. Dadurch kann ein früherer Betriebszustand der Walzanlage jeden in Folge ermittelten Korrekturfaktor - und infolgedessen auch den ermittelten Sollwert - beeinflussen.

Alternativ kann es vorteilhaft sein, das Kurzzeitgedächtnis des LSTM-Netzes für jedes zu produzierende Metallband gezielt aktivieren bzw. neu aufbauen zu können. Hierzu werden vorzugsweise während des Betriebs der Walzanlage die vorbekannten Produktionsparameter bzw. -werte für jedes der produzierten Warmbänder gespeichert. Das maschinell erlernte Modell kann dann vor Produktionsbeginn eines neuen Metallbands ausgehend von verschiedenen der gespeicherten vorbekannten Produktionsparametern mehrmals einen Korrekturfaktor für den bereitgestellten Materialparameterwert ermitteln. Insbesondere kann der Korrekturfaktor mehrmals ermittelt werden, bevor der ausgehend von gegenwärtigen vorbekannten Produktionsparametern ermittelte Korrekturfaktor in das physikalische Modell eingeht. Die mehrmals ermittelten Korrekturfaktoren werden dabei zweckmäßigerweise verworfen, d. h. der Ermittlung des Sollwerts jedenfalls nicht unmittelbar zugrunde gelegt. Auf diese Weise können einzelne Betriebszustände gezielt unberücksichtigt bleiben. Ein derartiges Vorgehen ermöglicht somit eine erhöhte Kontrolle über das Kurzzeitgedächtnis des LSTM-Netzes.

Ein Produktionsbeginn eines neuen Metallbands im Sinne der Erfindung ist vorzugsweise der Beginn einer Produktion eines Metallbands mit neuen Zielvorgaben und entsprechend geänderten Eigenschaften, d. h. geänderten Bandparametern.

Einen besonders großen Nutzen hat das Verfahren gemäß dem ersten Aspekt der Erfindung bei der Ermittlung von Sollwerten für Walzparameter einer Walzgerüstgruppe oder einzelner Walzgerüste in der Walzanlage. Denn wie eingangs bereits erwähnt ist die Qualität des produzierten Metallbands besonders abhängig von solchen Walzparametern; eine besonders präzise Ermittlung der notwendigen Walzkraft, bei der sowohl statische oder nur langsam variierende Beziehungen zwischen den Bandparametern und der Walzkraft als auch ständig auftretende Variationen des Betriebs- oder Anlagenzustands (zum Beispiel fortschreitende Abnutzung der Walzen, Walzentemperatur-Fluktuationen, und/oder dergleichen) berücksichtigt werden kann, ist besonders wichtig nicht nur zum Erreichen der angestrebten Metallband-Dicke, sondern auch für die Einstellung anderer Parameter wie etwa dem Massenfluss oder die Berechnung des Profils und/oder der Planheit.

Infolgedessen ist es bevorzugt, dass der ausgewählte Produktionsparameter ein Walzparameter ist, insbesondere eine Walzkraft, ein Walzen-Drehmoment, eine Walzenbiegung und/oder eine Walzen-Axialverschiebung.

Da die in der oder den Walzgerüstgruppe(n) der Walzanlage erfolgende Dickenreduktion des Metall(vor-)produkts maßgeblich von der Verformbarkeit des verarbeiteten Metalls abhängt, ist es weiter bevorzugt, dass der Materialparameter, dessen Wert bereitgestellt wird, eine Fließspannung ist. Die Fließspannung ist hierbei diejenige Spannung, ab der das Material plastisch (und nicht mehr elastisch) verformt. Die Fließspannung kann infolgedessen ein besonders wichtiger Materialparameter sein für die Ermittlung des Sollwerts, wenn der ausgewählte Produktionsparameter ein Walzparameter, insbesondere die Walzkraft, ist.

Alternativ kann das Verfahren aber auch zur Ermittlung von Sollwerten für andere ausgewählte Produktionsparameter, etwa das Profil, die Planheit, die Breitung und/oder die Stauchung in einer Vorstraße eingesetzt werden.

Um auch das Langzeitgedächtnis des (zweiten) maschinell erlernten Modells verbessern zu können, werden nach einer Produktion des Metallbands mit dem für den Produktionsparameter ermittelten Sollwert vorzugsweise Bandparameter des produzierten Metallbands ermittelt. Beispielsweise können diese Bandparameter simuliert oder sensorisch erfasst werden. Zweckmäßigerweise wird das maschinell erlernte Modell dann mittels der ermittelten Bandparameter angepasst. Anders gesagt ist es bevorzugt, dass das rekurrente Netz, gegebenenfalls mit einem steuerbaren Kurzzeitgedächtnis, nach jedem produzierten Band neu adaptiert wird. Durch die Verbesserung des Langzeitgedächtnisses des Modells ist eine zuverlässigere Ermittlung des Korrekturfaktors und damit auch des Sollwerts für den ausgewählten Produktionsparameter möglich. Im Regelbetrieb kann so ein Metallband produziert werden, dessen Bandparameter noch näher an die Zielvorgaben heranreichen.

Gemäß dem zweiten Aspekt der Erfindung weist die Vorrichtung zum Ermitteln eines Sollwerts für einen ausgewählten Produktionsparameter einer Walzanlage mit wenigstens einer Walzgerüstgruppe zum Walzen eines Metallprodukts zu einem Metallband ein Bereitstellungsmodul auf, welches dazu eingerichtet ist, einen Wert eines Materialparameters für ein vorbestimmtes Referenzmaterial bereitzustellen. Ein zweites maschinell erlerntes Modell, welches auf einem rekurrenten neuronalen Netz beruht, ist dazu eingerichtet, auf Grundlage von vorbekannten Produktionsparametern bei der Metallbandproduktion einen Korrekturfaktor für den Materialparameter zu ermitteln. Schließlich ist noch ein Rechenmodul vorgesehen, welches dazu eingerichtet ist, den Sollwert für den Produktionsparameter der Walzanlage auf Grundlage eines physikalischen Produktionsparametermodells, in das der mit dem Korrekturfaktor angepasste Materialparameterwert und Zielvorgaben für das zu walzende Metallband eingehen, zu ermitteln.

Das (zweite) maschinell erlernte Modell kann dadurch, dass es auf einem rekurrenten neuronalen Netz beruht, insbesondere den gegenwärtigen Betriebszustand, in dem aktuell ein Metallband produziert wird, und gegebenenfalls auch eine vorbestimmte Anzahl an unmittelbar vorangehenden Betriebszuständen in die Produktionsplanung des nächsten Metallbands mit einbeziehen. Anders gesagt verfügt das (zweite) maschinell erlernte Modell dadurch ein "Kurzzeitgedächtnis", was eine deutliche Verbesserung der Korrekturfaktor-Vorhersage - und infolgedessen auch der Sollwert-Vorhersage - erlaubt.

Ein Modul im Sinne der Erfindung kann hard- und/oder softwaretechnisch ausgebildet sein. Das Modul kann insbesondere wenigstens eine, vorzugsweise mit einem Speicher- und/oder Bussystem daten- bzw. signalverbundene, Verarbeitungseinheit aufweisen. Beispielsweise kann das Modul eine Mikroprozessoreinheit (CPU) oder ein Modul einer solchen und/oder ein oder mehrere Programme oder Programmmodule aufweisen. Das Modul kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien, aufweisen. Das Programm kann derart beschaffen sein, dass es die hier beschriebenen Verfahren oder zumindest Teile davon verkörpert bzw. auszuführen imstande ist, sodass die Vorrichtung gemäß dem zweiten Aspekt der Erfindung die Schritte solcher Verfahren ausführen kann und damit insbesondere einen Sollwert für einen Produktionsparameter einer Walzanlage ermitteln kann.

Gemäß einem dritten Aspekt der Erfindung weist die Walzanlage zur Produktion von Metallband wenigstens eine Walzgerüstgruppe zum Walzen eines Metallprodukts zu einem Metallband, eine Vorrichtung gemäß dem zweiten Aspekt der Erfindung und eine Steuerungsvorrichtung auf, die zur Steuerung der Walzanlage auf Grundlage eines von der Vorrichtung ermittelten Sollwerts für einen ausgewählten Produktionsparameter der Walzanlage eingerichtet ist.

Mit einer derartigen Walzanlage können aus Metall(vor-)produkten wie z. B. einem frisch gegossenen Metallstrang, einer Bramme oder einem vorgewalzten Zwischenband Metallbänder produziert werden, deren Bandparameter den Zielvorgaben besonders nahekommen. Denn mithilfe des (zweiten) maschinell erlernten Modells, welches auf einem rekurrenten neuronalen Netz beruht, können, neben langfristig stabilen Beziehungen zwischen Bandparametern und Produktionsparametern, auch der aktuelle oder sogar noch weitere der zuletzt vorliegenden, sich in der Praxis dauernd ändernden Betriebszustände berücksichtigt werden.

Die Steuerungsvorrichtung kann hard- und/oder softwaretechnisch ausgebildet sein. Die Steuerungsvorrichtung kann insbesondere wenigstens eine, vorzugsweise mit einem Speicher- und/oder Bussystem daten- bzw. signalverbundene, Verarbeitungseinheit aufweisen. Beispielsweise kann die Steuerungsvorrichtung eine Mikroprozessoreinheit (CPU) oder ein Modul einer solchen und/oder ein oder mehrere Programme oder Programmmodule aufweisen. Die Steuerungsvorrichtung kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben.

Gemäß einem vierten Aspekt der Erfindung ist das Computerprogrammprodukt zur Durchführung eines Verfahrens gemäß dem ersten Aspekt der Erfindung konfiguriert. Ein solches Computerprogrammprodukt kann beispielsweise im Rahmen einer Prozessautomatisierung in einer Walzanlage ausgeführt werden. Das Computerprogrammprodukt enthält zweckmäßigerweise Befehle, die bei seiner Ausführung durch einen Computer, etwa im Rahmen der Prozessautomatisierung der Walzanlage, diesen veranlassen, das Verfahren gemäß dem ersten Aspekt der Erfindung auszuführen.

Gemäß einem fünften Aspekt der Erfindung beruht das maschinell erlernte Modell auf einem rekurrenten neuronalen Netz und ist dazu eingerichtet, auf Grundlage von vorbekannten Produktionsparametern bei der Metallbandproduktion einen bereitgestellten Korrekturfaktor für einen Materialparameter zu ermitteln. Dieses maschinell erlernte Modell ist zweckmäßigerweise zum Einsatz als (zweites) maschinell erlerntes Modell in einem Verfahren gemäß dem ersten Aspekt der Erfindung und/oder in einer Vorrichtung gemäß dem zweiten Aspekt der Erfindung geeignet. Vorzugsweise ist das maschinell erlernte Modell erhältlich durch Trainieren des rekurrenten neuronalen Netzes anhand von Trainingsdaten, die eine Vielzahl von verschiedenen vorbekannten Produktionsparametern bzw. Produktionsparameterwerten und diesen Produktionsparametern bzw. -werten zugeordnete Korrekturfaktoren enthalten.

Nachfolgend werden bevorzugte Ausführungsformen der Erfindung und deren Weiterbildungen beschrieben. Diese Ausführungsformen können jeweils, soweit dies nicht ausdrücklich ausgeschlossen wird, beliebig miteinander sowie mit den im Weiteren beschriebenen Aspekten der Erfindung kombiniert werden.

### Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:
- Fig 1: ein Beispiel eines Verfahrens und einer Vorrichtung zum Ermitteln eines Sollwerts für einen ausgewählten Produktionsparameter einer Walzanlage;
- Fig 2: ein Beispiel eines rekurrenten neuronalen Netzes; und
- Fig 3: ein Beispiel einer Walzanlage.

Soweit zweckdienlich, werden in den Figuren dieselben Bezugszeichen für dieselben oder einander entsprechende Elemente der Erfindung verwendet.

### Beschreibung der Ausführungsformen

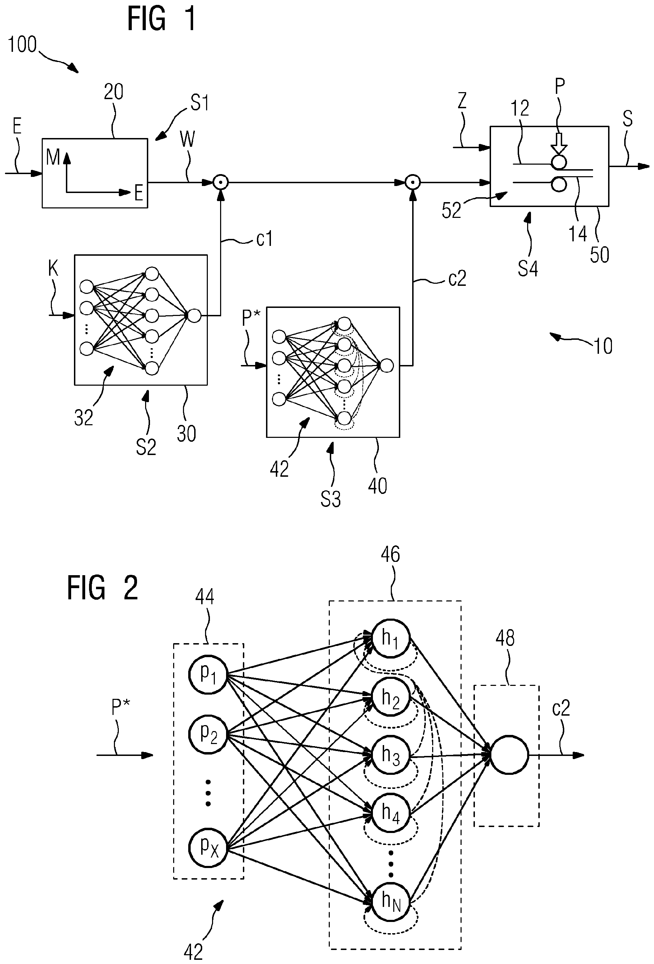

FIG 1 zeigt ein Beispiel eines Verfahrens 100 und einer Vorrichtung 10 zum Ermitteln eines Sollwerts S für einen ausgewählten Produktionsparameter P einer Walzanlage, mit welcher ein Metallband 14 produzierbar ist.

In einem Verfahrensschritt S1 wird ein Wert W eines Materialparameters M für ein vorbestimmtes Referenzmaterial bereitgestellt. Dieser Materialparameterwert W kann beispielsweise ermittelt werden, etwa durch eine Simulation oder eine analytische oder numerische Berechnung. Zweckmäßigerweise werden bei der Ermittlung des Materialparameterwerts W weitere, bereits zum Beispiel durch Messung bekannte Materialeigenschaften oder Bearbeitungsgrößen E des Referenzmaterials wie etwa dessen Umformgrad, dessen Umformgeschwindigkeit, Temperatur und/oder dergleichen berücksichtigt. Die Bereitstellung des Materialparameterwerts W kann beispielsweise durch ein Bereitstellungsmodul 20 der Vorrichtung 10 erfolgen.

Dieser Materialparameterwert W für das Referenzmaterial muss, bevor er der Ermittlung des Sollwerts S zugrunde gelegt werden kann, angepasst werden.

In einem Verfahrensschritt S2 wird daher ein erster Korrekturfaktor c1 ermittelt. Dieser erste Korrekturfaktor c1 korrigiert den Materialparameter M zweckmäßigerweise hinsichtlich des tatsächlich zu verarbeitenden Materials, insbesondere hinsichtlich dessen Härte. Hierzu weist die Vorrichtung 10 ein erstes maschinell erlerntes Modell 30 auf, das auf einem vorwärtsgerichteten neuronalen Netz 32 ("feedforward neural network") beruht. Das erste maschinell erlernte Modell 30 ist zweckmäßigerweise dazu eingerichtet, auf Grundlage von Materialkenndaten K, welche den Zustand des als nächstes in der Walzanlage zu verarbeitenden Metalls charakterisieren, den ersten Korrekturfaktor c1 für den Materialparameter M zu ermitteln. Die entsprechende Einrichtung des ersten maschinell erlernten Modells 30 erfolgt zweckmäßigerweise über ein entsprechendes Training des vorwärtsgerichteten neuronalen Netzes 32. Das erste maschinell erlernte Modell 30 bzw. das entsprechend trainierte vorwärtsgerichtete neuronale Netz 32 ist infolgedessen materialspezifisch.

Die Materialkenndaten K können beispielsweise die chemische Zusammensetzung, die Temperatur und/oder dergleichen des zu verarbeitenden Metalls charakterisieren. Zweckmäßigerweise handelt es sich bei der als Eingabe für das erste maschinell erlernte Modell 30 zu verwendenden Temperatur dabei um die Temperatur des Metallprodukts in dem Bereich, in dem auch die mit dem Sollwert S anzusteuernde Anlagenkomponente auf das zu verarbeitende Metallprodukt 12 einwirkt. Handelt es sich bei dem ausgewählten Produktionsparameter P, für den der Sollwert S ermittelt werden soll, wie in FIG 1 rein beispielhaft angedeutet ist, um die Walzkraft in einem Walzgerüst der Walzanlage, ist es bevorzugt, dem Ermitteln des ersten Korrekturfaktors c1 die Temperatur z. B. eines Metallstrangs oder einer davon abgetrennten Bramme bzw. eines vorgewalzten Zwischenbands beim Durchlaufen des Walzgerüsts zugrunde zu legen.

Der erste Korrekturfaktor c1 reicht jedoch noch nicht aus, um den Einfluss der Walzanlage, d. h. deren Komponenten, auf die Verarbeitung des Metallprodukts 12 in der Walzanlage abzubilden. In einem weiteren Verfahrensschritt S3 wird daher ein zweiter Korrekturfaktor c2 ermittelt. Dieser zweite Korrekturfaktor c2 korrigiert den Materialparameter M zweckmäßigerweise hinsichtlich des gegenwärtigen Betriebszustands der Anlage, d. h. insbesondere hinsichtlich der gegenwärtigen Betriebs- oder Produktionsparameter. Hierzu weist die Vorrichtung 10 ein zweites maschinell erlerntes Modell 40 auf, das auf einem rekurrenten neuronalen Netz 42 ("recurrent neural network") beruht. Das zweite maschinell erlernte Modell 40 ist zweckmäßigerweise dazu eingerichtet, auf Grundlage von vorbekannten Produktionsparametern P* bei der Metallbandproduktion, d. h. bekannten Werten einiger bei der Metallbandproduktion relevanten Produktionsparameter, den zweiten Korrekturfaktor c2 für den Materialparameter M zu ermitteln. Die entsprechende Einrichtung des zweiten maschinell erlernten Modells 40 erfolgt zweckmäßigerweise über ein entsprechendes Training des rekurrenten neuronalen Netzes 42. Das zweite maschinell erlernte Modell 40 bzw. das entsprechend trainierte rekurrente neuronale Netz 42 ist infolgedessen anlagenspezifisch, insbesondere gerüstspezifisch.

Die vorbekannten Produktionsparameter bzw. Produktionsparameterwerte P* können zum Beispiel durch Messung oder Vorgabe von Betriebsparametern eines Entzunderers wie Spüldruck, Spülmittelmenge, chemische Spülmittel-Zusammensetzung und/oder dergleichen oder durch Messung oder Vorgabe von Betriebsparametern einzelner Walzgerüste einer Walzgerüstgruppe wie Walzkraft, Walzen-Drehmoment, Walzenbiegung, Walzen-Axialverschiebung, Walzentemperatur/Walzentemperaturprofil und/oder dergleichen vorbekannt sein.

Die Vorrichtung 10 weist schließlich ein Rechenmodul 50 auf. Mit diesem Rechenmodul 50 wird in einem Verfahrensschritt S4 schließlich der Sollwert S für den ausgewählten Produktionsparameter P ermittelt. Dieser Ermittlung werden zweckmäßigerweise der mit dem ersten und zweiten Korrekturfaktor c1, c2 korrigierte Materialparameterwert W sowie Zielvorgaben Z für das zu walzende Metallband 14 zugrunde gelegt. Der korrigierte Materialparameterwert W sowie die Zielvorgaben Z gehen bevorzugt in ein physikalisches Produktionsparametermodell 52 ein. Dieses physikalische Produktionsparametermodell 52 kann die physikalischen Beziehungen zwischen den Zielvorgaben Z, d. h. den gewünschten Eigenschaften des zu produzierenden Metallbands 14, und dem ausgewählten Produktionsparameter P, im vorliegenden Beispiel also der auszuübenden Walzkraft, abbilden. Das Rechenmodul 50 ist entsprechend dazu eingerichtet, den Sollwert S für den ausgewählten Produktionsparameter P auf Grundlage des physikalischen Produktionsparametermodells 52 zu ermitteln.

FIG 2 zeigt ein Beispiel eines rekurrenten neuronalen Netzes 42, welches dem zweiten maschinell erlernten Modell zugrunde liegen kann. Dieses Netz 42 verfügt über eine Eingangsschicht 44, in welcher X (z. B. gemessene oder eingestellte) Produktionsparameterwerte pᵢ mit i = 1...X aufgenommen werden. Zusätzlich sind eine oder mehrere auch als verstecke Schichten ("hidden layers") bezeichnete Zwischenschichten 46 mit mehreren Knoten oder Zellen vorgesehen. Vorliegend ist nur eine Zwischenschicht 46 gezeigt, die N Knoten hⱼ mit j = 1... N umfasst. Schließlich weist das Netz 42 eine Ausgangsschicht 48 auf, welcher der zweite Korrekturfaktor c2 entnommen werden kann.

In die Berechnung eines Beitrags zum zweiten Korrekturfaktor c2 in den Knoten hⱼ gehen zunächst, wie auch in einem vorwärtsgerichteten neuronalen Netz, alle Werte aus der Eingangsschicht 44 ein. Infolgedessen wird die Ermittlung des zweiten Korrekturfaktors c2 ausgehend von den vorbekannten Produktionsparametern P* durchgeführt, wie durch die schwarzen durchgezogenen Pfeile angedeutet ist. Dabei ergibt sich durch ein Training des Netzes 42 in jedem Knoten hⱼ eine individuelle Aktivierungsfunktion, mit der die Eingänge ("inputs") des jweiligen Knotens hⱼ aufsummiert werden. Die Aktivierungsfunktionen in den einzelnen Knoten hⱼ können sich z. B. durch ein (im Training herausgebildetes) Gewicht und einen (im Training herausgebildeten) Bias voneinander unterscheiden.

Die Herausbildung der Aktivierungsfunktionen in jedem Knoten hⱼ entspricht dem Aufbau einer Art "Langzeitgedächtnis" des Netzes 42.

Zusätzlich gehen in die Berechnung jedoch auch das Ergebnis ("output") des jeweiligen Knotens hⱼ aus der vorangehenden Berechnung ein. Dies ist durch die gepunkteten Pfeile angedeutet. Zudem geht in die Berechnung die Ergebnisse ("outputs") aller anderen Knoten h₁...hⱼ₋₁, hⱼ₊₁...h_{N} aus der vorangehenden Berechnung ein, wie durch die gestrichelten Pfeile angedeutet ist (aus Gründen der Übersichtlichkeit ist dies nur für den ersten Knoten h₁ dargestellt).

Die Berechnung der Beiträge zum zweiten Korrekturfaktor c2 auf Grundlage von innerhalb der Zwischenschicht 46 zuvor berechneten Ergebnissen ermöglicht eine Art "Kurzzeitgedächtnis" des Netzes 42. Hierdurch hängt der ermittelte zweite Korrekturfaktor c2 von den Berechnungen des zuvor ermittelten zweiten Korrekturfaktors c2 und damit auch vom Betriebszustand der Anlage bei der vorherigen Vorhersage des Korrekturfaktors c2 ab. Dieser hängt jedoch bereits ebenfalls vom zuvor ermittelten Korrekturfaktor bzw. Betriebszustand ab, und so weiter. Der Einfluss eines früheren Betriebszustands kann infolgedessen dauerhaft sein.

Um dem entgegenzuwirken, zum Beispiel wenn der Anlagenzustand geändert wird, etwa die Walzen eines Walzgerüsts ausgetauscht werden, kann das rekurrente neuronale Netz 42 Knoten hⱼ oder Zellen mit je einem Eingangstor ("input gate") , einem Merk- und Vergesstor ("forget gate") und einem Ausgangstor ("output gate") aufweisen. Die derart ausgebildeten Knoten hⱼ werden auch als LSTM-Zellen ("long short term memory") bezeichnet. Über diese Tore kann die Signalverarbeitung in der Zwischenschicht 46 gezielt kontrolliert werden. Insbesondere kann der Einfluss von Vorhersagen des Korrekturfaktors c2 für vorherig produzierte Bänder so bei Bedarf gezielt vermieden oder zumindest eingeschränkt, z. B. zeitlich begrenzt, werden.

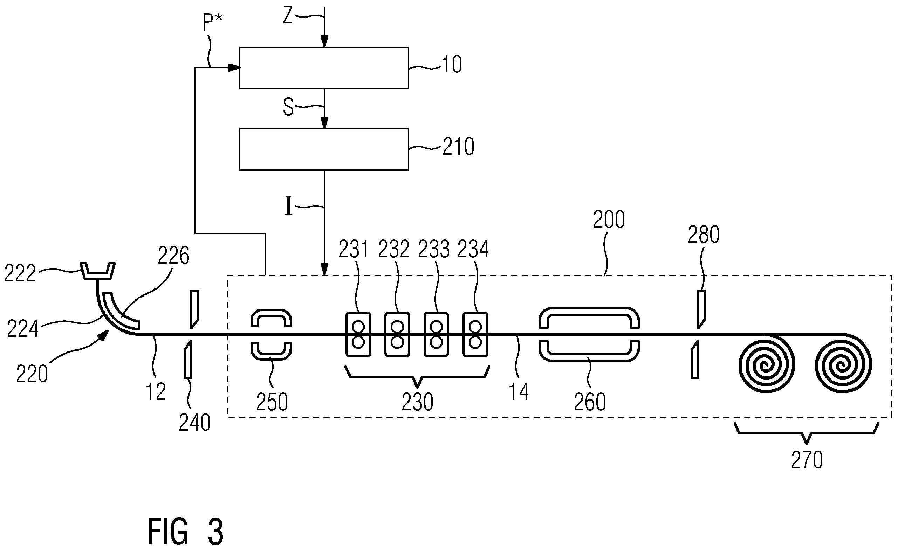

FIG 3 zeigt ein Beispiel einer Gießwalzanlage. Die Gießwalzanlage umfasst eine Gießmaschine 220 zum Gießen eines Metallstrangs 12, wenigstens eine Walzgerüstgruppe 230 zum Walzen des gegossenen Metallstrangs 12 oder davon abgetrennter Brammen zu einem Warmband 14, eine Vorrichtung 10 zum Ermitteln eines Sollwerts S für einen Produktionsparameter einer Walzanlage 200 und eine Steuerungsvorrichtung 210, die zur Steuerung der Walzanlage 200, insbesondere der wenigstens eine Walzgerüstgruppe 230, auf Grundlage des von der Vorrichtung 10 ermittelten Sollwerts S eingerichtet ist.

Neben der Gießmaschine 220, die zweckmäßigerweise eine Kokille 222 und eine in einem Bogen verlaufende Strangführung 224 mit einer Sekundärkühlung 226 aufweist, und der Walzgerüstgruppe 230 mit mehreren, im vorliegenden Beispiel vier, Walzgerüsten 231, 232, 233, 234, umfasst die Gießwalzanlage zweckmäßigerweise noch weitere Anlagenkomponenten. Beispielsweise ist stromaufwärts der Walzgerüstgruppe 230 eine erste Trennvorrichtung 240, zum Beispiel eine Pendelschere, zum Abtrennen von Brammen vom gegossenen Metallstrang 12 und eine Entzunderungsvorrichtung 250 angeordnet. Stromabwärts der ersten Walzgerüstgruppe 230 kann eine Kühlstrecke 260 zum Abkühlen des Warmbands 14 auf eine Haspeltemperatur, mehrere, im vorliegenden Beispiel zwei, Haspeln 270 zum Aufhaspeln des gekühlten Warmbands 14 und wenigstens eine zweite Trennvorrichtung 280 Trennen des aufgehaspelten Warmbands vom nachfolgenden Warmband 14 vorgesehen sein.

Die Walzanlage 200 wird im vorliegenden Beispiel von der Entzunderungsvorrichtung 250, den Walzgerüsten 231-234 der Walzgerüstgruppe 230, der Kühlstrecke 260, den Haspeln 270 und der zweiten Trennvorrichtung 280 gebildet. Die Walzanlage kann aber auch weitere Komponenten aufweisen, beispielweise eine vor der Walzgerüstgruppe 230 angeordnete Heizvorrichtung, etwa einen Tunnelofen oder eine Induktionsheizung, zum Aufheizen des Metallstrangs 12 oder davon abgetrennter Brammen. Die Walzanlage 200 muss auch nicht zwingend im Zusammenhang mit einer Gießwalzanlage vorliegen; vielmehr kann die Walzanlage 200 auch getrennt von einer Gießmaschine 220 vorgesehen sein.

Soll, aus dem laufenden Betrieb heraus, ein neues Warmband 14, d. h. ein Warmband 14 mit gegenüber dem gegenwärtig produzierten Warmband 14 geänderten Eigenschaften, zum Beispiel einer anderen Banddicke, produziert werden, kann mittels der Vorrichtung 10 ein entsprechender Sollwert S für einen ausgewählten Produktionsparameter der Walzanlage 200, zum Beispiel die Walzkraft in einem der Walzgerüste 231-234, ermittelt werden. Die Vorrichtung 10 verarbeitet dazu zweckmäßigerweise für die Produktion des neuen Warmbands 14 vorbekannte Produktionsparameter bzw. -werte P*, zum Beispiel die Querschnittsabmessungen des Metallstrangs 12, die notwendige Dickenreduktion, die gegenwärtige Walzkraft, das gegenwärtige Walzen-Drehmoment, die gegenwärtige Walztemperatur und/oder dergleichen in jedem der Gerüste 231-234 einen Spülmitteldruck und/oder -fluss in der Entzunderungsvorrichtung 250, eine Kühlleistung in der Kühlstrecke 260 und/oder dergleichen. Ebenso verarbeitet die Vorrichtung 10 zweckmäßigerweise Zielvorgaben Z, welche die gewünschten Eigenschaften des zu produzierenden Warmbands 14 charakterisieren.

Auf Grundlage des so ermittelten Sollwerts S kann die Steuerungsvorrichtung 210 ein entsprechendes Steuersignal I an eine Anlagenkomponente ausgeben, welche den ausgewählten Produktionsparameter verkörpert bzw. den ermittelten Sollwert S einstellen kann. Beispielsweise kann ein Steuersignal I an ein Walzgerüst 231-234 der Walzgerüstgruppe 230 ausgegeben werden, um die Walzkraft zum Erreichen der Zielvorgaben Z einzustellen.

Da sich die Vorrichtung 10 beim Ermitteln des Sollwerts S auf ein (zweites) maschinell erlerntes Modell, welches auf einem rekurrenten neuronalen Netz beruht, stützt, kann die zeitliche Entwicklung des Anlagenzustands bis in den gegenwärtigen Anlagenzustand hinein berücksichtigt werden. Die Ermittlung des Sollwert S kann also, durch das Kurzzeitgedächntis des Netzes, implizit auf einer "Momentaufnahme" des Anlagenzustands beruhen, auch wenn dieser in seiner Gesamtheit (jedenfalls in der Praxis) nicht durch Parameterwerte charakterisiert werden kann. Daneben kann auch der Einfluss unmittelbar zuvor produzierter Metallbänder 14 in die Sollwertermittlung eingehen, z. B. die dadurch bewirkte, möglicherweise inhomogene Abnutzung der Walzen oder deren Temperaturerhöhung. Da dieser Effekt, wie voranstehend im Zusammenhang mit FIG 2 beschrieben, auf der Architektur des rekurrenten neuronalen Netzes gründet, ist hierfür eine gezielte, manuelle Anpassung des (zweiten) maschinell erlernten Modells, d. h. ein kontinuierliches Training, nicht zwingend notwendig. Vielmehr adaptiert sich das maschinell erlernte Modell automatisch.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 10: Vorrichtung
- 12: Metallstrang, Metallprodukt
- 14: Metallband, Warmband
- 20: Bereitstellungsmodul
- 30: weiteres (erstes) maschinell erlerntes Modell
- 32: vorwärtsgerichtetes neuronales Netz
- 40: (zweites) maschinell erlerntes Modell
- 42: rekurrentes neuronales Netz
- 44: Eingangsschicht
- 46: Zwischenschicht
- 48: Ausgangsschicht
- 50: Rechenmodul
- 52: physikalisches Produktionsparametermodell

- 100: Verfahren
- S1: Bereitstellung Materialparameterwert
- S2: Ermittlung des weiteren (ersten) Korrekturfaktor
- S3: Ermittlung (zweiter) Korrekturfaktor
- S4: Ermittlung Sollwert

- 200: Walzanlage
- 210: Steuerungsvorrichtung
- 220: Gießmaschine
- 222: Kokille
- 224: Strangführung
- 226: Sekundärkühlung
- 230: Walzgerüstgruppe
- 231-234: Walzgerüste
- 240: erste Trennvorrichtung
- 250: Entzunderungsvorrichtung
- 260: Kühlstrecke
- 270: Haspel
- 280: zweite Trennvorrichtung

- W: Wert
- M: Materialparameter
- c1: erster Korrekturfaktor
- c2: zweiter Korrekturfaktor
- E: Materialeigenschaften oder Bearbeitungsgrößen
- K: Materialkenndaten
- S: Sollwert
- Z: Zielvorgabe
- P: ausgewählter Produktionsparameter
- P*: vorbekannte Produktionsparameter
- I: Steuerungssignal
- pᵢ: Produktionsparameterwert
- hᵢ: Knoten

## Patentansprüche

1. Verfahren (100) zum Ermitteln eines Sollwerts (S) für einen ausgewählten Produktionsparameter (P) einer Walzanlage (200) zum Walzen eines Metallprodukts (12) zu einem Metallband (14), wobei
- ein Wert (W) eines Materialparameters (M) für ein vorbestimmtes Referenzmaterial bereitgestellt wird (S1),
- ein maschinell erlerntes Modell (40), welches auf einem rekurrenten neuronalen Netz (42) beruht, auf Grundlage von vorbekannten Produktionsparametern (P*) bei der Metallbandproduktion einen Korrekturfaktor (c2) für den Materialparameter (M) ermittelt (S3) und
- der Sollwert (S) für den ausgewählten Produktionsparameter (P) der Walzanlage (200) auf Grundlage eines physikalischen Produktionsparametermodells (52), in das der mit dem Korrekturfaktor (c2) angepasste Materialparameterwert (W) und Zielvorgaben (Z) für das zu walzende Metallband (14) eingehen, ermittelt wird (S4).

2. Verfahren (100) nach Anspruch 1, wobei ein weiteres maschinell erlerntes Modell (30), welches auf einem vorwärtsgerichteten neuronalen Netz (32) beruht, auf Grundlage von Materialkenndaten (K), welche den Zustand des als nächstes in der Walzanlage zu verarbeitenden Metalls charakterisieren, einen weiteren Korrekturfaktor (c1) für den Materialparameter (M) ermittelt (S2).

3. Verfahren (100) nach Anspruch 1 oder 2, wobei das maschinell erlernte Modell (40) auf einem rekurrenten neuronalen Netz (42) mit einem steuerbaren Kurzzeitgedächtnis beruht.

4. Verfahren (100) nach einem der vorangehenden Ansprüche, wobei das maschinell erlernte Modell (40) den Korrekturfaktor (c2) bei der aufeinanderfolgenden Produktion von Metallbändern (14) kontinuierlich ermittelt.

5. Verfahren (100) nach einem der Ansprüche 1 bis 3, wobei
- während des Betriebs der Walzanlage (200) die vorbekannten Produktionsparameter (P*) für jedes der produzierten Metallbänder (14) gespeichert werden und
- das maschinell erlernte Modell (40) vor dem Walzen eines neuenMetallbands (14) ausgehend von verschiedenen der gespeicherten vorbekannten Produktionsparameter (P*) mehrmals einen Korrekturfaktor (c2) für den Materialparameter (M) ermittelt.

6. Verfahren (100) nach einem der vorangehenden Ansprüche, wobei der ausgewählte Produktionsparameter (P) ein Walzparameter ist, insbesondere eine Walzkraft, ein Walzen-Drehmoment, eine Walzenbiegung und/oder eine Walzen-Axialverschiebung.

7. Verfahren (100) nach einem der vorangehenden Ansprüche, wobei der Materialparameter (M), dessen Wert (W) vorgegeben wird, eine Fließspannung ist.

8. Verfahren (100) nach einem der vorangehenden Ansprüche, wobei nach einer Produktion des Metallbands (14) mit dem für den ausgewählten Produktionsparameter (P) ermittelten Sollwert (S) Bandparameter des produzierten Metallbands (14) ermittelt und das maschinell erlernte Modell (40) mittels der ermittelten Bandparameter angepasst wird.

9. Vorrichtung (10) zum Ermitteln eines Sollwerts (S) für einen ausgewählten Produktionsparameter (P) einer Walzanlage (200) mit wenigstens einer Walzgerüstgruppe (230) zum Walzen eines Metallprodukts (12) zu einem Metallband (14), mit
- einem Bereitstellungsmodul (20), welches dazu eingerichtet ist, einen Wert (W) eines Materialparameters (M) für ein vorbestimmtes Referenzmaterial bereitzustellen,
- einem maschinell erlernten Modell (40), welches auf einem rekurrenten neuronalen Netz (42) beruht und dazu eingerichtet ist, ausgehend von vorbekannten Produktionsparametern (P*) bei der Metallbandproduktion einen Korrekturfaktor (c2) für den Materialparameter (M) zu ermitteln, und
- einem Rechenmodul (50), welches dazu eingerichtet ist, den Sollwert (S) für den ausgewählten Produktionsparameter (P) der Walzanlage (200) auf Grundlage eines physikalischen Produktionsparametermodells (52), in das der mit dem Korrekturfaktor (c2) angepasste Materialparameterwert (W) und Zielvorgaben (Z) für das zu walzende Metallband (14) eingehen, zu ermitteln.

10. Walzanlage (200) zur Produktion von Metallband (14), mit
- wenigstens einer Walzgerüstgruppe (230) zum Walzen eines Metallprodukts (12) zu einem Metallband (14),
- einer Vorrichtung (10) nach Anspruch 9 und
- einer Steuerungsvorrichtung (210), die zur Steuerung der Walzanlage (200) auf Grundlage eines von der Vorrichtung (10) ermittelten Sollwerts (S) für einen ausgewählten Produktionsparameter (P) der Walzanlage (200) eingerichtet ist.

11. Computerprogrammprodukt zur Durchführung eines Verfahrens (100) nach einem der Ansprüche 1 bis 8.

12. Maschinell erlerntes Modell (40), welches auf einem rekurrenten neuronalen Netz (42) beruht und dazu eingerichtet ist, ausgehend von vorbekannten Produktionsparametern (P*) bei einer Metallbandproduktion einen Korrekturfaktor (c2) für einen Materialparameter (M) zu ermitteln.
